# EUROPEAN PATENT APPLICATION

(11) **EP 4 832 552 A1**
(43) Date of publication of application: **28.10.2026**
(21) Application number: 24918331.0
(22) Date of filing: 23.12.2024
(51) Int. Cl.: H04W 24/02

(54) **COMMUNICATION METHOD AND RELATED DEVICE**

(30) Priority: 17.01.2024 CN 202410071403
(71) Applicant: Honor Device Co., Ltd., Shenzhen, Guangdong 518040 (CN)
(72) Inventor: ZHENG, Guozeng, Shenzhen, Guangdong 518040 (CN)
(74) Representative: Goddar, Heinz J.
(86) International application number: PCT/CN2024/141411
(87) International publication number: WO 2025/152723

(57) **Abstract**

This application provides a communication method and a related device, which relate to the field of communication technologies. When detecting that a beam management condition is satisfied, a terminal device automatically sends notification information that the beam management condition has been satisfied to a network device, to trigger a beam management procedure, thereby avoiding a method in which the terminal device in a related technology needs to feed back a beam management result according to a requirement of the network device before performing beam management. In this way, efficiency of identifying an optimal beam is improved.

## Description

This application claims priority to Chinese Patent Application No. 202410071403.9, filed with the China National Intellectual Property Administration on January 17, 2024 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

With the development of mobile communication technologies, especially the continuous development of new-generation mobile communication technologies such as the fifth generation mobile networks (the fifth generation mobile networks, 5G), functions of communication systems are constantly being enhanced. Specifically, a 5G communication system may provide an enhanced mobile broadband (enhanced Mobile Broadband, eMBB), with a faster connection, a higher throughput, and a greater capacity, and provide ultra-reliable low-latency communications (ultra-reliable low-latency communications, uRLLC). In this way, a network is applied to key task scenarios that require uninterrupted and stable data links, such as extended reality (eXtended Reality, XR) scenarios or cloud gaming (Cloud Gaming) scenarios, to satisfy requirements of the scenarios for ultra-high reliability and low latency of a wireless communication network.

The communication system may include a network device like a base station. Each base station may support communication of a plurality of terminal devices. The terminal device may be user equipment (user equipment, UE). In many task scenarios, to enhance communication quality between the terminal device and the network device, the network device sends a pilot signal used for beam management to the terminal device. After receiving the pilot signal, the terminal device measures quality and characteristics of a plurality of sent or received beams, to identify an optimal beam, and feeds back a measurement result to the network device, so that the network device may indicate the optimal beam to the terminal device, to enable communication between the terminal device and the network device through the optimal beam.

However, there is a delay in a process from feedback of the measurement result of the pilot signal by the terminal device based on a configuration of the network device to reception of the measurement result by the network device. As a result, efficiency of identifying the optimal beam is low.

### SUMMARY

An objective of this application is to provide a communication method and a related device, which can improve efficiency of identifying an optimal beam.

According to a first aspect, this application provides a communication method, applied to a mobile phone and a computer terminal device. The method includes: sending notification information to a network device if it is detected that the terminal device satisfies a beam management condition, where the beam management condition is related to link quality of a reference signal of the terminal device and/or link quality associated with a channel of the terminal device; and receiving feedback information sent by the network device regarding the notification information. Therefore, when detecting that the beam management condition is satisfied, the terminal device automatically sends the notification information that the beam management condition has been satisfied to the network device, to trigger a beam management procedure, thereby avoiding a method in which the terminal device in a related technology needs to feed back a beam management result according to a requirement of the network device before performing beam management. In this way, efficiency of identifying an optimal beam is improved.

In some specific implementations, the sending notification information to a network device if it is detected that the terminal device satisfies a beam management condition includes: sending the notification information to the network device if detecting one or more of the following: a link quality value of the reference signal of the terminal device is greater than or equal to a first threshold, a link quality value associated with the channel of the terminal device is less than a second threshold, the link quality value of the reference signal of the terminal device is greater than or equal to the first threshold and the link quality value associated with the channel of the terminal device is less than the second threshold, the link quality value of the reference signal of the terminal device is better than the link quality value associated with the channel of the terminal device, and a quality change value that is of the link quality value associated with the channel of the terminal device and that is within a first duration is greater than a change threshold. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

In some specific implementations, a method for obtaining the link quality value of the reference signal includes: determining a first reference signal according to a reference signal used for candidate beam detection and/or a target reference signal configured by the network device; and obtaining a link quality value of the first reference signal.

In some specific implementations, the sending the notification information to the network device if it is detected that a link quality value of the reference signal of the terminal device is greater than or equal to a first threshold includes: sending the notification information to the network device if it is detected that a reference signal receiving power RSRP value of the first reference signal is greater than or equal to the first threshold, and/or a signal to interference plus noise ratio SINR value of the first reference signal is greater than or equal to the first threshold. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

In some specific implementations, the first threshold is a value configured through the network device or a value obtained through protocol predefinition.

In some specific implementations, the first threshold is a value the same as a threshold used for candidate beam detection.

In some specific implementations, a block error rate corresponding to the first threshold is a product of a block error rate corresponding to a threshold for candidate beam detection and a first scaling coefficient, where the first scaling coefficient is a coefficient configured through the network device.

In some specific implementations, a method for obtaining the link quality value associated with the channel includes: obtaining, according to a second reference signal, the link quality value associated with the channel.

In some specific implementations, a method for determining the second reference signal includes: determining the second reference signal according to a reference signal used for beam failure detection; and/or determining the second reference signal according to a target reference signal configured by the network device; and/or determining the second reference signal through a demodulation reference signal DMRS associated with a physical downlink control channel PDCCH; and/or determining the second reference signal through a reference signal quasi co-located with the DMRS associated with the PDCCH; and/or determining the second reference signal through a reference signal associated with an activated transmission configuration indicator TCI state; and/or determining the second reference signal through a reference signal associated with a TCI state corresponding to a control resource set CORESET.

In some specific implementations, the sending the notification information to the network device if it is detected that sending the notification information to the network device if it is detected that a link quality value associated with the channel of the terminal device is less than a second threshold includes: sending the notification information to the network device if it is detected that an RSRP value of the second reference signal is less than the second threshold, and/or an SINR value of the second reference signal is less than the second threshold. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

In some specific implementations, the second threshold is a value configured through the network device or a value obtained through protocol predefinition.

In some specific implementations, a block error rate corresponding to the second threshold is a product of a block error rate corresponding to a threshold for beam failure detection and a second scaling coefficient, where the second scaling coefficient is a coefficient configured through the network device.

In some specific implementations, the sending the notification information to the network device if it is detected that the link quality value of the reference signal of the terminal device is greater than the link quality value associated with the channel of the terminal device includes: sending the notification information to the network device if it is detected that an RSRP value of the reference signal of the terminal device is greater than an RSRP value of a link associated with the channel of the terminal device; or sending the notification information to the network device if it is detected that an SINR value of the reference signal of the terminal device is greater than an SINR value of a link associated with the channel of the terminal device. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

In some specific implementations, the sending the notification information to the network device if it is detected that an RSRP value of the reference signal of the terminal device is greater than an RSRP value of a link associated with the channel of the terminal device includes: sending the notification information to the network device if it is detected that the RSRP value of the reference signal of the terminal device is greater than a sum of the RSRP value of the link associated with the channel of the terminal device and a first offset. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

In some specific implementations, the sending the notification information to the network device if it is detected that an SINR value of the reference signal of the terminal device is greater than an SINR value of a link associated with the channel of the terminal device includes: sending the notification information to the network device if it is detected that the SINR value of the reference signal of the terminal device is greater than a sum of the SINR value of the link associated with the channel of the terminal device and a first offset. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

In some specific implementations, the sending notification information to a network device includes: sending the notification information to the network device through a physical uplink control channel PUCCH and/or a physical random access channel PRACH.

In some specific implementations, the sending the notification information to the network device includes: sending the notification information to the network device a first time after detecting that the terminal device satisfies the beam management condition.

In some specific implementations, the sending the notification information to the network device through a physical uplink control channel PUCCH and/or a physical random access channel PRACH includes: sending the notification information to the network device through the PUCCH and/or the PRACH according to a type of the beam management condition.

In some specific implementations, the PUCCH or the PRACH is associated with a configuration of a channel state CSI report.

In some specific implementations, the sending notification information to a network device includes: sending the notification information to the network device through a media access control control element MAC CE, where the MAC CE includes the beam management condition and/or first reference signal information, and the first reference signal information includes one or more of a reference signal index of a first reference signal, an RSRP value corresponding to the first reference signal, and an SINR value corresponding to the first reference signal.

In some specific implementations, the sending the notification information to the network device through a media access control control element MAC CE includes: including the MAC CE in a physical uplink shared channel PUSCH scheduled by a first piece of downlink control information DCI after the beam management condition is satisfied, and sending the notification information to the network device.

In some specific implementations, the sending the notification information to the network device through a media access control control element MAC CE includes: including the MAC CE in a 1^{st} configured grant PUSCH sent a second time after the beam management condition is satisfied, and sending the notification information to the network device.

In some specific implementations, the receiving feedback information sent by the network device regarding the notification information includes: receiving, by detecting a PDCCH scheduled in a search space SS or a CORESET, the feedback information sent by the network device regarding the notification information.

In some specific implementations, the receiving feedback information sent by the network device regarding the notification information includes: if receiving a trigger command, receiving the feedback information sent by the network device regarding the notification information, where the trigger command is used for triggering a CSI report corresponding to the configuration of the channel state CSI report.

In some specific implementations, the receiving feedback information sent by the network device regarding the notification information includes: if receiving a CSI report returned by the network device, receiving the feedback information sent by the network device regarding the notification information.

In some specific implementations, the method further includes: re-sending the notification information to the network device if the feedback information regarding the notification information is not received a third time after the notification information is sent to the network device.

According to a second aspect, this application provides a communication method, applied to a network device. The method includes: receiving notification information sent by a terminal device, where the notification information is received when the terminal device detects that a beam management condition is satisfied, and the beam management condition is related to link quality of a reference signal of the terminal device and/or link quality associated with a channel of the terminal device; and sending feedback information regarding the notification information to the terminal device. Therefore, when detecting that the beam management condition is satisfied, the terminal device automatically sends the notification information that the beam management condition has been satisfied to the network device, to trigger a beam management procedure, thereby avoiding a method in which the terminal device in a related technology needs to feed back a beam management result according to a requirement of the network device before performing beam management. In this way, efficiency of identifying an optimal beam is improved.

In some specific implementations, the beam management condition includes one or more of the following: a link quality value of the reference signal of the terminal device is greater than or equal to a first threshold, a link quality value associated with the channel of the terminal device is less than a second threshold, the link quality value of the reference signal of the terminal device is greater than or equal to the first threshold and the link quality value associated with the channel of the terminal device is less than the second threshold, the link quality value of the reference signal of the terminal device is better than the link quality value associated with the channel of the terminal device, and a quality change value that is of the link quality value associated with the channel of the terminal device and that is within a first duration is greater than a change threshold. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

In some specific implementations, the receiving notification information sent by a terminal device includes: receiving, through a PUCCH and/or a PRACH, the notification information sent by the terminal device.

In some specific implementations, the receiving the notification information sent by the terminal device includes: receiving, at a fourth time, the notification information sent by the terminal device, where the fourth time is a first time after the terminal device detects that the beam management condition is satisfied.

In some specific implementations, the receiving, through a PUCCH and/or a PRACH, the notification information sent by the terminal device includes: receiving, through the PUCCH and/or the PRACH according to a type of the beam management condition, the notification information sent by the terminal device.

In some specific implementations, the PUCCH or the PRACH is associated with a configuration of a channel state CSI report.

In some specific implementations, the receiving notification information sent by a terminal device includes: receiving, through a media access control control element MAC CE, the notification information sent by the terminal device, where the MAC CR includes the beam management condition and/or first reference signal information, and the first reference signal information includes one or more of a reference signal index of a first reference signal, an RSRP value corresponding to the first reference signal, and an SINR value corresponding to the first reference signal.

In some specific implementations, the sending feedback information regarding the notification information to the terminal device includes: sending the feedback information regarding the notification information to the terminal device by detecting a PDCCH scheduled in a search space SS or a CORESET.

According to a third aspect, this application provides a terminal device, including: a storage, configured to store a computer program or computer instructions; and a processor, configured to execute the computer program or computer instructions stored in the storage, to cause the terminal device to perform the method according to the first aspect.

According to a fourth aspect, this application provides a network device, including: a storage, configured to store a computer program or computer instructions; and a processor, configured to execute the computer program or computer instructions stored in the storage, to cause the network device to perform the method according to the second aspect.

According to a fifth aspect, this application provides a communication system, including a terminal device and a network device, where the terminal device is configured to perform the method according to the first aspect, and the network device is configured to perform the method according to the second aspect.

According to a sixth aspect, this application provides a computer storage medium, configured to store a computer program, and the computer program, when executed, is used for implementing the methods according to the first aspect and the second aspect.

According to a seventh aspect, this application provides a communication apparatus. The apparatus is used in a terminal device, and includes: a notification information sending module and a feedback information receiving module. The notification information sending module is configured to send notification information to a network device if it is detected that the terminal device satisfies a beam management condition, the beam management condition represents that a link associated with a channel of the terminal device needs to be changed, and the notification information represents that the link associated with the channel of the terminal device is to be changed to a link of a reference signal. The feedback information receiving module is configured to receive feedback information sent by the network device regarding the notification information, and the feedback information represents that the link associated with the channel of the terminal device has been changed to the link of the reference signal. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

According to an eighth aspect, this application provides a communication apparatus. The apparatus is used in a network device, and includes: a notification information receiving module and a feedback information sending module. The notification information receiving module is configured to receive notification information sent by a terminal device, the notification information is received when the terminal device detects that a beam management condition is satisfied, the beam management condition represents that a link associated with a channel of the terminal device needs to be changed, and the notification information represents that the link associated with the channel of the terminal device is to be changed to a link of a reference signal. The feedback information sending module is configured to send feedback information regarding the notification information to the terminal device, and the feedback information represents that the link associated with the channel of the terminal device has been changed to the link of the reference signal. Therefore, when detecting that the beam management condition is satisfied, the terminal device automatically sends the notification information that the beam management condition has been satisfied to the network device, to trigger the beam management procedure, thereby avoiding the method in which the terminal device in the related technology needs to feed back the beam management result according to the requirement of the network device before performing beam management. In this way, the efficiency of identifying the optimal beam is improved.

Based on the foregoing technical solutions, this application has the following beneficial effects:

This application provides a communication method and a related device. When detecting that a beam management condition is satisfied, a terminal device automatically sends notification information that the beam management condition has been satisfied to a network device, to trigger a beam management procedure, thereby avoiding a method in which the terminal device in a related technology needs to feed back a beam management result according to a requirement of the network device before performing beam management. In this way, efficiency of identifying an optimal beam is improved.

### BRIEF DESCRIPTION OF DRAWINGS

FIG. 1 is an example diagram of a communication scenario between a base station and a terminal according to an embodiment of this application;
FIG. 2 is a flowchart of a communication method according to an embodiment of this application;
FIG. 3 is a flowchart of another communication method according to an embodiment of this application;
FIG. 4 is a schematic diagram of hardware composition of an electronic device according to an embodiment of this application;
FIG. 5 is a schematic diagram of hardware composition of another electronic device according to an embodiment of this application;
FIG. 6 is a schematic diagram of a communication apparatus according to an embodiment of this application; and
FIG. 7 is a schematic diagram of another communication apparatus according to an embodiment of this application.

### DESCRIPTION OF EMBODIMENTS

In the specification, claims, and accompanying drawings of this application, terms such as "first", "second", and "third" are intended to distinguish between different objects but do not indicate a particular order.

In embodiments of this application, a word like "example" or "for example" is used to represent giving an example, an illustration, or a description. Any embodiment or design scheme described as "example" or "for example" in the embodiments of this application should not be explained as being more preferred or having more advantages than another embodiment or design scheme. Exactly, use of the word like "example" or "for example" is intended to present a related concept in a specific manner.

The embodiments of this application are applied to a communication system. The communication system may be a second-generation (2G) communication system, a third-generation (3G) communication system, an LTE system, a fifth-generation (5G) communication system, a hybrid architecture of long term evolution (Long Term Evolution, LTE) and 5G, a 5G new radio (5G New Radio, 5G NR) system, or a new communication system that emerges in future development of communication.

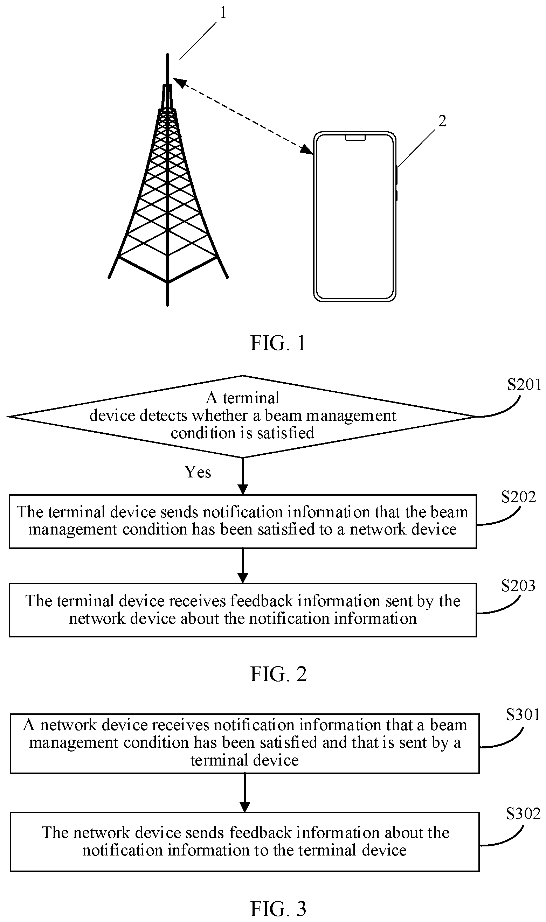

The communication system includes a first device and a second device. The first device may be a network-side device configured to provide a network communication function, and is also referred to as a network device or a network element in some cases. The network device may generally be a base station (including a functional unit of the base station or a combination of functional units of the base station) or a core network unit. The core network unit may be a functional unit in a core network, including but not limited to an access and mobility management function (Access and Mobility Management Function, AMF) unit or a session management function (Session Management Function, SMF) unit. The second device may be a device that accesses a network, and may generally be a terminal. FIG. 1 is an example diagram of a communication scenario between a base station and a terminal according to an embodiment of this application. A base station 1 and a terminal 2 are included in FIG. 1.

In the embodiments provided in this application, the base station may be any device having a wireless transceiver function, including but not limited to an evolved base station (NodeB, eNB, or e-NodeB, evolutional Node B) in long term evolution (long term evolution, LTE), a base station (gNodeB or gNB) or a transmission receiving point/transmission reception point (transmission receiving point/transmission reception point, TRP) in new radio (new radio, NR), a base station in subsequent 3GPP evolution, an access node in a Wi-Fi system, a wireless relay node, a wireless backhaul node, or the like. The base station may be a macro base station, a micro base station, a pico base station, a small cell, a relay station, a balloon station, or the like. The base station may include one or more co-located or non-co-located transmission points (Transmission Reception Points, TRPs). Alternatively, the base station may be a radio controller, a centralized unit (centralized unit, CU), and/or a distributed unit (distributed unit, DU) in a cloud radio access network (cloud radio access network, CRAN) scenario. The base station may communicate with the terminal, or may communicate with the terminal through a relay station. The terminal may communicate with a plurality of base stations using different technologies. For example, the terminal may communicate with a base station supporting an LTE network, may communicate with a base station supporting a 5G network, and may also establish a dual connection with the base station supporting the LTE network and a dual connection with the base station supporting the 5G base station.

In the embodiments provided in this application, the terminal device may be in various forms, such as a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), an in-vehicle terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and a wearable terminal device. The terminal may also be referred to as a terminal device, user equipment (user equipment, UE), an access terminal device, an in-vehicle terminal, an industry control terminal, a UE unit, a UE station, a mobile site, a mobile station, a remote station, a remote terminal device, a mobile device, a UE terminal device, a terminal device, a wireless communication device, a UE agent, a UE apparatus, or the like sometimes. Alternatively, the terminal may be a fixed terminal or a mobile terminal.

As described above, in many task scenarios, to enhance communication quality between the terminal device and the network device, the network device sends a pilot signal used for beam management to the terminal device. After receiving the pilot signal, the terminal device measures quality and characteristics of a plurality of sent or received beams, to identify an optimal beam, and feeds back a measurement result to the network device, so that the network device may indicate the optimal beam to the terminal device, to enable communication between the terminal device and the network device through the optimal beam.

However, there is a delay in a process from feedback of the measurement result of the pilot signal by the terminal device based on a configuration of the network device to reception of the measurement result by the network device. As a result, efficiency of identifying the optimal beam is low.

In view of this, this application provides a communication method and a related device. In the communication method, when detecting that a beam management condition is satisfied, a terminal device automatically sends notification information that the beam management condition has been satisfied to a network device, to trigger a beam management procedure, thereby avoiding a method in which the terminal device in a related technology needs to feed back a beam management result according to a requirement of the network device before performing beam management. In this way, efficiency of identifying an optimal beam is improved.

To make the technical solutions of this application clearer and easier to understand, the following describes the communication method in this application with reference to the accompanying drawings.

FIG. 2 is a schematic diagram of a communication method according to an embodiment of this application. The method is applied to a terminal device like a mobile phone or a computer. The method includes the following steps.

S201: The terminal device detects whether a beam management condition is satisfied. If the beam management condition is satisfied, step S202 is performed.

When the terminal device detects that at least one of the following five beam management conditions is satisfied, step S202 is performed.

First, a first beam management condition is described. The first beam management condition is that a link quality value of a reference signal is greater than or equal to a first threshold.

In the field of communications, the reference signal is generally used for comparing and calibrating a received signal, and may be a signal of a known mode or a specific frequency to ensure that information is received and decoded correctly.

Link quality of the reference signal refers to performance of a communication link for transmitting the reference signal. The link quality of the reference signal may be determined from a plurality of aspects such as signal strength, a signal-to-noise ratio, a bit error rate, a delay, and a coverage area. The link quality directly affects reliability and accuracy of the reference signal in a communication system.

In the communication method disclosed in this embodiment of this application, the link quality of the reference signal is obtained based on a first reference signal. Further, a manner for determining the first reference signal specifically includes at least one of the following two manners.

A first manner is that the first reference signal is the same as a reference signal used for candidate beam detection (candidate beam detection). Candidate beam detection refers to a process in which a receiving end performs detection and evaluation on a possible transmission beam in the communication system, to select a beam that is most suitable for a current communication environment, thereby improving signal quality, a coverage area, and a data transmission rate of the communication system.

A second manner is that the first reference signal is a reference signal configured by a base station and specialized for the terminal device to initiate a subsequent beam management procedure.

In the communication method disclosed in this embodiment of this application, the link quality value of the reference signal may be measured by using a reference signal receiving power (Reference Signal Receiving Power, RSRP) value or a signal to interference plus noise ratio (Signal to Interference plus Noise Ratio, SINR) value that is obtained by measuring the first reference signal by the terminal device. The RSRP value refers to an average value of signal powers received on all REs (resource elements) carrying the reference signal in a symbol, and the SINR value refers to a ratio of strength of a received useful signal to strength of a received interference signal (noise and interference).

It is to be noted that, if the RSRP value and the SINR value are greater, it indicates that the link quality of the reference signal is better. In other words, magnitudes of the RSRP value and the SINR value are positively correlated with the link quality value of the reference signal.

It is to be noted that, the link quality of the reference signal may be jointly determined by link quality of a plurality of reference signals (for example, may be an average value of RSRP values of the plurality of reference signals), or may be determined by link quality of one of a plurality of reference signals. This is not limited in this application.

The first threshold (Threshold 1) is calculated through an assumed transmission parameter (for example, an assumed PDCCH transmission parameter) and corresponds to a specific block error rate (BLER), denoted as BLER1. The first threshold may be 10-1, 10-2, or the like. This is not limited in this application.

In some examples, the first threshold may be a value configured through a network device like a base station or obtained through protocol predefinition.

In some other examples, the first threshold may alternatively be a value the same as a threshold used for candidate beam detection. The threshold for candidate beam detection is generally a parameter defined according to a system design and a performance requirement, and is mainly used for discovering a new candidate beam in a beam failure recovery (Beam Failure Recovery) procedure.

In some other examples, the first threshold may alternatively be a value different from the threshold used for candidate beam detection. Specifically, the block error rate BLER1 corresponding to the first threshold may be a product of a block error rate BLER corresponding to the threshold for candidate beam detection and a scaling coefficient. The scaling coefficient may be configured by the network device like the base station.

Secondary, a second beam management condition is described. The second beam management condition is that a link quality value associated with a channel is less than a second threshold.

In the field of communications, the channel refers to a medium for transmission of a signal between a network device and a terminal device, and directly affects communication quality. A link associated with the channel refers to a communication path or connection between the network device and the terminal device, and is related to transmission of the signal in space or frequency.

Link quality associated with the channel refers to performance, such as stability and reliability, of signal transmission on the specific link. The link quality associated with the channel is affected by various factors, including but not limited to signal attenuation and fading, a multipath effect, interference and noise, weather, an environmental condition, and the like.

In the communication method disclosed in this embodiment of this application, the link quality associated with the channel is obtained based on a second reference signal. Further, a manner for determining the second reference signal specifically includes at least one of the following six manners.

A first manner is that the second reference signal is the same as a reference signal used for beam failure detection (beam failure detection). An objective of beam failure detection is that when quality degradation or unsuitability of a beam is detected, a timely measure can be taken for handling or switching to a more suitable beam, thereby improving signal quality, a coverage area, and a data transmission rate of the communication system.

A second manner is that the second reference signal is a reference signal configured by a base station and specialized for the terminal device to initiate a subsequent beam management procedure.

A third manner is that the second reference signal is determined through a demodulation reference signal (Demodulation Reference Signal, DMRS) associated with a physical downlink control channel (Physical Downlink Control Channel, PDCCH). The physical downlink control channel PDCCH is a channel used by a network device like a base station to transmit control information to the terminal device in wireless communication. Main functions of the PDCCH include scheduling assignment (scheduling assignments), resource indication (resource indications), uplink resource assignment (uplink grants), and the like. In a wireless communication system, the demodulation reference signal DMRS is a reference signal used for signal demodulation at a receiving end, and helps the receiving end perform signal detection, channel estimation, and data decoding, thereby implementing a more reliable and efficient wireless communication system.

A fourth manner is that the second reference signal is determined through a reference signal quasi co-located (Quasi Co-Location, QCL) with the DMRS associated with a PDCCH. If a channel characteristic of a symbol at an antenna port can be derived from another antenna port, the two antenna ports are considered quasi co-located. In other words, in two quasi co-located ports, a channel estimation result obtained from one port can be used for the other port.

A fifth manner is that the second reference signal is determined through a reference signal associated with an activated transmission configuration indicator (Transmission Configuration Indicator, TCI) state (state). The transmission configuration indicator state refers to a quasi co-location relationship used for indicating two signals in a communication system. Generally, the transmission configuration indicator state indicates at least one reference signal. If a signal or channel is associated with a transmission configuration indicator, the signal or channel and a reference signal indicated by a transmission configuration indicator state are in a quasi co-location relationship.

A sixth manner is that the second reference signal is determined through a reference signal associated with a TCI state associated with a control resource set (CORESET). The CORESET is a set of resources used for transmitting control signaling, and helps implement control and scheduling on a wireless communication system. It is to be noted that, the link quality associated with the channel can be determined only through reference signals associated with TCI states associated with a part of CORESETs. For example, the second reference signal can be determined only through a reference signal associated with a TCI state associated with a lowest indexed CORESET, so that the link quality associated with the channel can be determined through the second reference signal.

In the communication method disclosed in this embodiment of this application, the link quality of the reference signal may be measured by using an RSRP value or SINR value obtained by measuring the second reference signal by the terminal. A specific measurement method is similar to the foregoing measurement method for the first reference signal, and details are not described herein again.

The second threshold (Threshold 2) is calculated through an assumed transmission parameter, and corresponds to a specific block error rate (BLER), denoted as BLER2. The second threshold may be 10-1, 10-2, or the like. This is not limited in this application.

In some examples, the second threshold may be a value configured through a network device like a base station or obtained through protocol predefinition.

In some other examples, the second threshold may alternatively be a value different from a threshold used for beam failure detection. The threshold for beam failure detection is generally a parameter defined according to a system design and a performance requirement, and is mainly used for detecting a failed beam in a beam failure recovery (Beam Failure Recovery) procedure. Specifically, the block error rate BLER2 corresponding to the second threshold may be lower than a BLER corresponding to the threshold for beam failure detection. For example, the BLER corresponding to the threshold for beam failure detection is 10-1, and the block error rate BLER2 corresponding to the second threshold is 5x10-2. Specifically, the block error rate BLER2 corresponding to the second threshold may be a product of the BLER corresponding to the threshold for beam failure detection and a scaling coefficient. The scaling coefficient may be configured by the network device like the base station, and the scaling coefficient is a value greater than 0 and less than 1.

It is to be noted that, the second threshold is generally a value less than the first threshold. For example, if the block error rate corresponding to the first threshold is 10-1, the block error rate corresponding to the second threshold may be 10-2.

Subsequently, a third beam management condition is described. The third beam management condition is that the link quality value of the reference signal is greater than or equal to the first threshold and the link quality value associated with the channel is less than the second threshold.

Subsequently, a fourth beam management condition is described. The fourth beam management condition is that the link quality value of the reference signal is better than the link quality value associated with the channel.

Specifically, that the link quality value of the reference signal is better than the link quality value associated with the channel may specifically include the following six cases.

A first case is that an RSRP value corresponding to the link quality of the reference signal is greater than or equal to an RSRP value corresponding to the link quality associated with the channel.

A second case is that an RSRP value corresponding to the link quality of the reference signal is greater than or equal to a sum of an RSRP value corresponding to the link quality value associated with the channel and an offset.

A third case is that an SINR value corresponding to the link quality of the reference signal is greater than or equal to an SINR value corresponding to the link quality associated with the channel associated with the channel.

A fourth case is that an SINR value corresponding to the link quality of the reference signal is greater than or equal to a sum of an SINR value corresponding to the link quality associated with the channel and an offset.

A fifth case is that a block error rate corresponding to the link quality value of the reference signal is less than a block error rate corresponding to the link quality value associated with the channel.

A sixth case is that a block error rate corresponding to the link quality value of the reference signal is less than a product of a block error rate corresponding to the link quality value associated with the channel and a scaling coefficient. The scaling coefficient may be configured by the network device like the base station, and the scaling coefficient is a value greater than 0 and less than 1.

It may be understood that when one or more of the foregoing six cases are satisfied, it can be determined that the link quality value of the reference signal is better than the link quality value associated with the channel.

Finally, a fifth beam management condition is described. The fifth beam management condition is that link quality associated with the channel at a first moment changes by more than the second threshold compared to link quality associated with the channel at a second moment. In some examples, the link quality associated with the channel at the first moment corresponds to RSRP1, and the link quality associated with the channel at the second moment corresponds to RSRP2. In this case, the fifth beam management condition may be (RSRP1-RSRP2), which is greater than the second threshold.

In some other examples, a block error rate corresponding to the link quality associated with the channel at the first moment is BLER1, and a block error rate corresponding to the link quality associated with the channel at the second moment is BLER2. In this case, the fifth beam management condition may be (BLER1-BLER2), which is greater than the second threshold.

It is to be noted that, if the terminal device satisfies the fifth beam management condition, it represents that stability of a link associated with a channel of the terminal device is low. Low stability of the link associated with the channel may result in declined communication quality of connection instability of the communication system. For example, this may result in an increased packet loss rate, an increased communication transmission delay, frequent connection interruptions, difficulty in adaptation, a limited network capacity, and the like.

S202: The terminal device sends notification information that the beam management condition has been satisfied to the network device.

In some specific implementations, the notification information may be sent to the network device like a base station through a physical uplink control channel (Physical Uplink Control Channel, PUCCH) resource and/or a physical random access channel (Physical Random Access Channel, PRACH) resource. The PUCCH is a physical uplink control channel in the wireless communication system, and is used for transmission of uplink control information. The PUCCH carries uplink-related control signaling, such as a scheduling request, uplink power control, and ACK/NACK (acknowledgement/non-acknowledgement) feedback. The PRACH is a physical random access channel in the wireless communication system, and is used by the terminal device to perform initial access in a network or to request a resource as needed.

In the communication method disclosed in this embodiment of this application, different PUCCHs or PRACHs may be associated with different beam management conditions. For example, when detecting that the first beam management condition is satisfied, the terminal device may send notification information that the beam management condition has been satisfied to the network device through a PRACH. When detecting that the second beam management condition is satisfied, the terminal device may send notification information that the beam management condition has been satisfied to the network device through another PRACH. This is not limited in this application.

In the communication method disclosed in this embodiment of this application, different PUCCHs or PRACHs may be associated with different channel state information (Channel State Information, CSI) report configurations. The different CSI report configurations may be associated with different beam management conditions and different reporting content. For example, when detecting that the first beam management condition is satisfied, the terminal device may send notification information that the beam management condition has been satisfied to the network device through a PUCCH or PRACH. Further, the PUCCH may send beam information and the like as reporting content to the network device, to form a CSI report. When detecting that the second beam management condition is satisfied, the terminal device may send notification information that the beam management condition has been satisfied to the network device through the PRACH, and send the PRACH based on spatial filtering information obtained by the first reference signal, for example, determine transmit beam information of the PRACH based on receive beam information obtained by the first reference signal.

In the communication method disclosed in this embodiment of this application, the foregoing notification information may be sent a first time T1 after detecting that the terminal device satisfies the beam management condition, and the first time T1 is related to a terminal capability. It is to be noted that, the first time may be 1 ms (millisecond) or the like. A specific first time is not limited in this application.

In some other specific implementations, the notification information may alternatively be sent to the network device like a base station through a media access control control element (MAC Control Element, MAC CE). The MAC CE refers to a control element in an MAC layer between a physical layer (PHY) and a logic link control (RLC) layer, and is used for control information transmission in the MAC layer, to implement effective management and scheduling on a radio resource.

In the communication method disclosed in this embodiment of this application, the MAC CE includes at least a satisfied beam management condition and/or first reference signal information.

In some examples, the first reference signal information may include a reference signal index of the first reference signal and/or an RSRP and/or SINR value corresponding to the first reference signal. In some other examples, a link quality value of a reference signal corresponding to the first reference signal included in the MAC CE is greater than or equal to the first threshold.

In the communication method disclosed in this embodiment of this application, transmission of the MAC CE may be performed on one of the following physical channels. A first case is that transmission of the MAC CE is performed on a first physical uplink shared channel (Physical Uplink Shared Channel, PUSCH) scheduled by a first piece of downlink control information (Downlink Control Information, DCI) after the beam management condition is satisfied. The PUSCH is used for transmission of user data sent by the terminal device to the network device like a base station, and the PUSCH allows a plurality of terminal devices to perform uplink data transmission at a same time and on a same frequency resource. It is to be noted that, the PUSCH scheduled by the DCI is not a PUSCH for data retransmission.

A second case is that transmission of the MAC CE is performed on a first configured grant (CG, configured grant) PUSCH a second time T2 after the beam management condition is satisfied. In the communication system, a configuration or grant of a specific resource allows the terminal device to perform a communication activity of a specific type within a specific spectrum and time range. It is to be noted that, the second time T2 is related to the terminal capability.

S203: The terminal device receives feedback information sent by the network device regarding the notification information.

In the communication method disclosed in this embodiment of this application, the feedback information corresponding to the notification information may be obtained in one of the following manners.

A first manner is that the terminal device detects a PDCCH scheduled in a search space or a control resource set (CORESET) specialized for the terminal device to initiate the beam management procedure. Specifically, the terminal device may monitor the PDCCU scheduled in the search space or the control resource set. If the PDCCU scheduled in the search space or the control resource set is detected, it represents that the terminal device has accepted the feedback information regarding the notification information. In this way, a corresponding operation can be performed according to a corresponding indication in the feedback information.

A second manner is that the terminal device detects another PUSCH having an HARQ ID the same as that of a PUSCH carrying an MAC CE. HARQ is an automatic repeat request mechanism, and is used for improving reliability of an uplink and a downlink. The HARQ ID is a unique identifier assigned to each HARQ process. Specifically, if the terminal device detects another PUSCH, and the PUSCH has an HARQ ID the same as that of a PUSCH carrying an MAC CE, it represents that the terminal device has accepted the feedback information regarding the notification information. In this way, a corresponding operation can be performed according to a corresponding indication in the feedback information.

A third manner is that the terminal device receives an activation command of a CSI report. It is to be noted that, the CSI report is associated with the foregoing beam management condition or the foregoing first reference signal. Further, the CSI report and the foregoing CSI report associated in the notification information are the same CSI report.

It is to be noted that, if the terminal device does not receive the feedback information regarding the notification information within a target duration after the notification information is sent, the terminal needs to continue to send the notification information until the terminal device receives the feedback information. The target duration is a third time T3. It is to be noted that, the third time T3 is related to the terminal capability.

In conclusion, this embodiment of this application discloses a communication method. When detecting that a beam management condition is satisfied, a terminal device automatically sends notification information that the beam management condition has been satisfied to a network device, to trigger a beam management procedure, thereby avoiding a method in which the terminal device in a related technology needs to feed back a beam management result according to a requirement of the network device before performing beam management. In this way, efficiency of identifying an optimal beam is improved.

FIG. 3 is a schematic diagram of another communication method according to an embodiment of this application. The method is applied to a network device like a base station. The method includes the following steps.

S301: The network device receives notification information that a beam management condition has been satisfied and that is sent by a terminal device.

In some specific implementations, the beam management condition includes at least one of the following: a link quality value of the reference signal of the terminal device is greater than or equal to a first threshold, a link quality value associated with the channel of the terminal device is less than a second threshold, the link quality value of the reference signal of the terminal device is greater than or equal to the first threshold and the link quality value associated with the channel of the terminal device is less than the second threshold, the link quality value of the reference signal of the terminal device is better than the link quality value associated with the channel of the terminal device, and a quality change value that is of the link quality value associated with the channel of the terminal device and that is within a first duration is greater than a change threshold.

In some specific implementations, the receiving notification information sent by a terminal device includes: receiving, through a PUCCH and/or a PRACH, the notification information sent by the terminal device.

In some specific implementations, the receiving the notification information sent by the terminal device includes: receiving, at a fourth time, the notification information sent by the terminal device, where the fourth time is a first time after the terminal device detects that the beam management condition is satisfied.

In some specific implementations, the receiving, through a PUCCH and/or a PRACH, the notification information sent by the terminal device includes: receiving, through the PUCCH and/or the PRACH according to a type of the beam management condition, the notification information sent by the terminal device.

In some specific implementations, the PUCCH or the PRACH is associated with a configuration of a channel state CSI report.

In some specific implementations, the receiving notification information sent by a terminal device includes: receiving, through a media access control control element MAC CE, the notification information sent by the terminal device, where the MAC CE includes the beam management condition and/or first reference signal information, and the first reference signal information includes one or more of a reference signal index of a first reference signal, an RSRP value corresponding to the first reference signal, and an SINR value corresponding to the first reference signal.

In some specific implementations, the sending feedback information regarding the notification information to the terminal device includes: sending the feedback information regarding the notification information to the terminal device by detecting a PDCCH scheduled in a search space SS or a CORESET.

S302: The network device sends feedback information regarding the notification information to the terminal device.

In conclusion, this embodiment of this application discloses a communication method. After receiving notification information that a beam management condition has been satisfied and that is sent by a terminal device, the network device sends feedback information regarding the notification information to the terminal device, thereby improving efficiency of identifying an optimal beam.

Based on the foregoing communication method, this application further provides an electronic device configured to perform the foregoing communication method. Descriptions are provided below with reference to an embodiment.

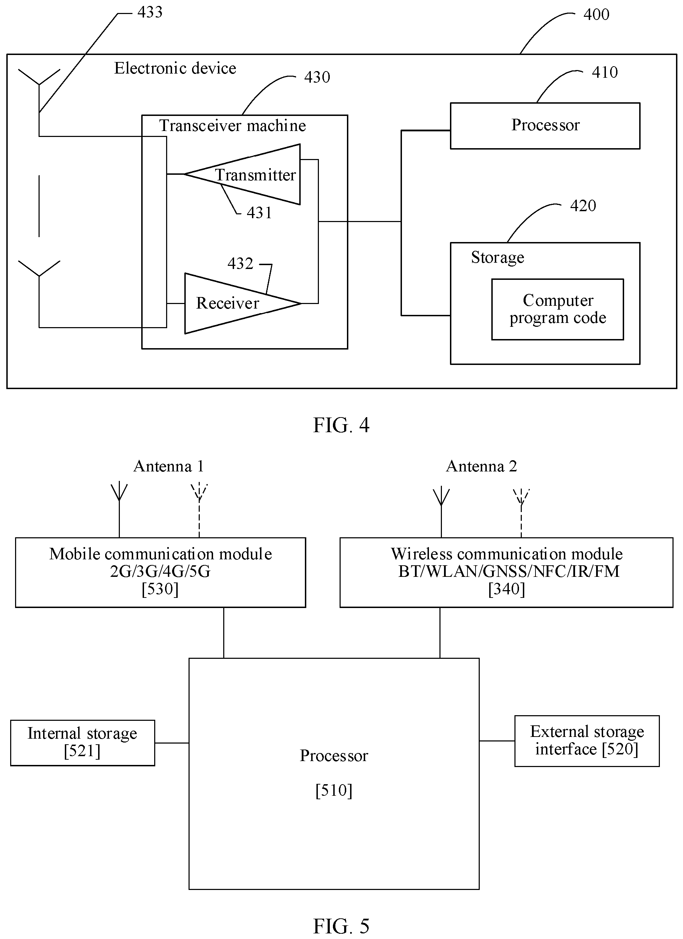

FIG. 4 is a schematic diagram of hardware composition of an electronic device according to an embodiment of this application. The electronic device may be a first device, including but not limited to a base station or a core network unit. FIG. 4 is a simplified schematic structural diagram of a base station. The base station includes a part 410, a part 420, and a part 430. The part 410 is mainly configured to perform baseband processing, control the base station, and the like. Generally, the part 410 is a control center of the base station, and may be referred to as a processor, configured to control the base station to perform a processing operation on a first device side in the foregoing method embodiment. The part 420 is mainly configured to store computer program code and data. The part 430 is mainly configured to perform radio frequency signal receiving and sending and perform conversion between a radio frequency signal and a baseband signal. Generally, the part 430 may be referred to as a transceiver module, a transceiver, a transceiver circuit, a transceiver machine, or the like. The transceiver module of the part 430 may also be referred to as a transceiver, a transceiver machine, or the like, and includes an antenna 433 and a radio frequency circuit (which is not shown in the figure). The radio frequency circuit is mainly configured to perform radio frequency processing. Optionally, a component configured to implement a receiving function in the part 430 may be regarded as a receiver, and a component configured to implement a sending function may be regarded as a transmitter. That is, the part 430 includes a receiver 432 and a transmitter 431. The receiver may also be referred to as a receiver module, a receiver machine, a receiver circuit, or the like. The sender may also be referred to as a transmitter module, a transmitter machine, a transmitter circuit, or the like.

The part 410 and the part 420 may include one or more boards. Each board may include one or more processors and one or more storages. The processor is configured to read and execute a program in the storage, to implement a baseband processing function and control the base station. If there are a plurality of boards, the boards may be interconnected to enhance a processing capability. In an optional implementation, alternatively, the plurality of boards may share one or more processors, or the plurality of boards share one or more storages, or the plurality of boards share one or more processors at the same time.

For example, in an implementation, the transceiver module of the part 430 is configured to perform a process related to sending and receiving that is performed by the base station (the first device) in the foregoing method embodiment. The processor of the part 410 is configured to perform a process related to processing performed by the base station in the foregoing method embodiment.

It should be understood that, FIG. 4 is merely an example instead of a limitation. The network device including the processor, storage, and transceiver machine may not rely on the structure shown in FIG. 4.

FIG. 5 is a schematic diagram of hardware composition of another electronic device according to an embodiment of this application. The electronic device may be a second device, and the second device may be a terminal, including but not limited to electronic devices such as a mobile phone, and a smart wearable device (for example, a smart watch). A mobile phone is used as an example below. The electronic device may include a processor 510, an external storage interface 520, an internal storage 521, an antenna 1, an antenna 2, a mobile communication module 530, a wireless communication module 540, and the like.

It may be understood that an example structure in this embodiment does not constitute a specific limitation on the electronic device. In some other embodiments, the electronic device may include more or fewer components than those shown in the figure, or some components may be combined, or some components may be split, or components are arranged in different manners. The components shown in the figure may be implemented by hardware, software, or a combination of software and hardware.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

It may be understood that a schematic interface connection relationship between the modules in this embodiment is merely an example for description, and constitutes no limitation on the structure of the electronic device. In some other embodiments of this application, the electronic device may alternatively use an interface connection manner different from that in the foregoing embodiment, or use a combination of a plurality of interface connection manners.

The external storage interface 520 may be configured to be connected to an external storage card, for example, a micro SD card, to expand a storage capability of the electronic device. The external storage card communicates with the processor 510 by using the external storage interface 520, to implement a data storage function, for example, storing a file such as music or a video in the external storage card.

The internal storage 521 may be configured to store computer executable program code, where the executable program code includes instructions. The processor 510 runs the instructions stored in the internal storage 521, to perform various function applications and data processing of the electronic device. The internal storage 521 may include a program storage area and a data storage area. The program storage area may store an operating system, an application required by at least one function (for example, a sound playing function or an image playing function), and the like. The data storage region may store data (for example, audio data and an address book) created during use of the electronic device. In addition, the internal storage 521 may include a high-speed random access memory, or may include a non-volatile memory like at least one magnetic disk memory, a flash memory, or a universal flash storage (universal flash storage, UFS). The processor 510 runs the instructions stored in the internal storage 521 and/or the instructions stored in the storage disposed in the processor, to implement various functional applications and data processing of the electronic device.

A wireless communication function of the electronic device may be implemented by using the antenna 1, the antenna 2, the mobile communication module 530, the wireless communication module 540, the modem processor, the baseband processor, and the like.

The antenna 1 and the antenna 2 are configured to transmit and receive electromagnetic wave signals. Each antenna of the electronic device may be configured to cover one or more communication frequency bands. Different antennas may be multiplexed to improve antenna utilization. For example, the antenna 1 may be multiplexed as a diversity antenna of a wireless local area network. In some other embodiments, the antennas may be used with a tuning switch.

The mobile communication module 530 may provide a solution to wireless communication such as 2G/3G/4G/5G applied to the electronic device. The mobile communication module 530 may include at least one filter, a switch, a power amplifier, a low noise amplifier (low noise amplifier, LNA), and the like. The mobile communication module 530 may receive an electromagnetic wave through the antenna 1, perform processing such as filtering and amplification on the received electromagnetic wave, and transmit a processed electromagnetic wave to the modem processor for demodulation. The mobile communication module 530 may further amplify a signal modulated by the modem processor, and convert the signal into an electromagnetic wave for radiation through the antenna 1. In some embodiments, at least some functional modules of the mobile communication module 530 may be disposed in the processor 510. In some embodiments, at least some functional modules of the mobile communication module 530 and at least some modules of the processor 510 may be disposed in a same component.

In some embodiments, the electronic device initiates or receives a call request through the mobile communication module 530 and the antenna 1.

In addition, an operating system, like an iOS operating system, an Android operating system, or a Windows operating system, runs on the foregoing components. An application may be installed and run on the operating system. A person skilled in the art may clearly understand that, for ease of description and brevity, explanations and beneficial effects of related content in any of the foregoing provided electronic devices, refer to corresponding method embodiments provided above, and details are not described herein again.

This application further provides a communication system. The communication system may include the first device (for example, the network device like the base station) shown in FIG. 4 and the second device (for example, the terminal like the mobile phone) shown in FIG. 5.

In this application, the terminal or the network device may include a hardware layer, an operating system layer running on the hardware layer, and an application layer running on the operating system layer. The hardware layer may include hardware such as a central processing unit (central processing unit, CPU), a memory management module (memory management unit, MMU), and a memory (which is also referred to as a main memory). An operating system in the operating system layer may be any one or more computer operating systems such as a Linux operating system, a Unix operating system, an Android operating system, an iOS operating system, or a windows operating system that implement service processing by using a process (process). The application layer may include applications such as a browser, an address book, word processing software, and instant messaging software.

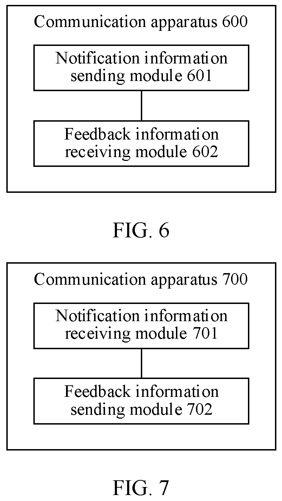

FIG. 6 is a schematic diagram of a communication apparatus according to an embodiment of this application. The communication apparatus 600 is used in a terminal device, and includes: a notification information sending module 601 and a feedback information receiving module 602.

Specifically, the notification information sending module 601 is configured to send notification information to a network device if it is detected that the terminal device satisfies a beam management condition, where the beam management condition is related to link quality of a reference signal of the terminal device and/or link quality associated with a channel of the terminal device; and
the feedback information receiving module 602 is configured to receive feedback information sent by the network device regarding the notification information.

In conclusion, this application discloses a communication apparatus. When detecting that a beam management condition is satisfied, a terminal device automatically sends notification information that the beam management condition has been satisfied to a network device, to trigger a beam management procedure, thereby avoiding a method in which the terminal device in a related technology needs to feed back a beam management result according to a requirement of the network device before performing beam management. In this way, efficiency of identifying an optimal beam is improved.

FIG. 7 is a schematic diagram of another communication apparatus according to an embodiment of this application. The communication apparatus 700 is used in a network device, and includes: a notification information receiving module 701 and a feedback information sending module 702.

Specifically, the notification information receiving module 701 is configured to receive notification information sent by a terminal device, where the notification information is received when the terminal device detects that a beam management condition is satisfied, and the beam management condition is related to link quality of a reference signal of the terminal device and/or link quality associated with a channel of the terminal device; and
the feedback information sending module 702 is configured to send feedback information regarding the notification information to the terminal device.

In conclusion, this application discloses a communication apparatus. When detecting that a beam management condition is satisfied, a terminal device automatically sends notification information that the beam management condition has been satisfied to a network device, to trigger a beam management procedure, thereby avoiding a method in which the terminal device in a related technology needs to feed back a beam management result according to a requirement of the network device before performing beam management. In this way, efficiency of identifying an optimal beam is improved.

A person skilled in the art may clearly understand that, for the purpose of convenient and brief description, for a detailed working process of the foregoing described system, device, and apparatus, reference may be made to the corresponding process in the foregoing method embodiments, and details are not described herein again.

The foregoing embodiments are merely intended for describing the technical solutions of this application, but not for limiting this application. Although this application is described in detail with reference to the foregoing embodiments, it should be understood that a person of ordinary skill in the art may still make modifications to the technical solutions described in the foregoing embodiments or make equivalent replacements to some technical features thereof, and these modifications or replacements will not cause the essence of corresponding technical solutions to depart from the scope of the technical solutions in the embodiments of this application.

## Claims

1. A communication method, applied to a terminal device, the method comprising:
sending notification information to a network device if it is detected that the terminal device satisfies a beam management condition, wherein the beam management condition is related to link quality of a reference signal of the terminal device and/or link quality associated with a channel of the terminal device; and
receiving feedback information sent by the network device regarding the notification information.

2. The method according to claim 1, wherein the beam management condition comprises at least one of the following:
a link quality value of the reference signal of the terminal device is greater than or equal to a first threshold, a link quality value associated with the channel of the terminal device is less than a second threshold, the link quality value of the reference signal of the terminal device is greater than or equal to the first threshold and the link quality value associated with the channel of the terminal device is less than the second threshold, the link quality value of the reference signal of the terminal device is better than the link quality value associated with the channel of the terminal device, and a quality change value that is of the link quality value associated with the channel of the terminal device and that is within a first duration is greater than a change threshold.

3. The method according to claim 2, wherein obtaining the link quality value of the reference signal comprises:
determining a first reference signal according to a reference signal used for candidate beam detection and/or a target reference signal configured by the network device; and
obtaining a link quality value of the first reference signal.

4. The method according to claim 3, wherein the sending notification information to a network device if it is detected that a link quality value of the reference signal of the terminal device is greater than or equal to a first threshold comprises:
sending the notification information to the network device if it is detected that a reference signal receiving power RSRP value of the first reference signal is greater than or equal to the first threshold, and/or a signal to interference plus noise ratio SINR value of the first reference signal is greater than or equal to the first threshold.

5. The method according to claim 2, wherein the first threshold is a value configured through the network device or a value obtained through protocol predefinition.

6. The method according to claim 2, wherein the first threshold is a value the same as a threshold used for candidate beam detection.

7. The method according to claim 2, wherein a block error rate corresponding to the first threshold is a product of a block error rate corresponding to a threshold for candidate beam detection and a first scaling coefficient, wherein the first scaling coefficient is a coefficient configured through the network device.

8. The method according to claim 2, wherein obtaining the link quality value associated with the channel comprises:
obtaining, according to a second reference signal, the link quality value associated with the channel.

9. The method according to claim 8, wherein determining the second reference signal comprises:
determining the second reference signal according to a reference signal used for beam failure detection; and/or
determining the second reference signal according to a target reference signal configured by the network device; and/or
determining the second reference signal through a demodulation reference signal DMRS associated with a physical downlink control channel PDCCH; and/or
determining the second reference signal through a reference signal quasi co-located with the DMRS associated with the PDCCH; and/or
determining the second reference signal through a reference signal associated with an activated transmission configuration indicator TCI state; and/or
determining the second reference signal through a reference signal associated with a TCI state corresponding to a control resource set CORESET.

10. The method according to claim 8, wherein the sending notification information to a network device if it is detected that a link quality value associated with the channel of the terminal device is less than a second threshold comprises:
sending the notification information to the network device if it is detected that an RSRP value of the second reference signal is less than the second threshold, and/or an SINR value of the second reference signal is less than the second threshold.

11. The method according to claim 2, wherein the second threshold is a value configured through the network device or a value obtained through protocol predefinition.

12. The method according to claim 2, wherein a block error rate corresponding to the second threshold is a product of a block error rate corresponding to a threshold for beam failure detection and a second scaling coefficient, wherein the second scaling coefficient is a coefficient configured through the network device.

13. The method according to claim 2, wherein the sending notification information to a network device if it is detected that the link quality value of the reference signal of the terminal device is greater than the link quality value associated with the channel of the terminal device comprises:
sending the notification information to the network device if it is detected that an RSRP value of the reference signal of the terminal device is greater than an RSRP value of a link associated with the channel of the terminal device; or
sending the notification information to the network device if it is detected that an SINR value of the reference signal of the terminal device is greater than an SINR value of a link associated with the channel of the terminal device.

14. The method according to claim 13, wherein the sending the notification information to the network device if it is detected that an RSRP value of the reference signal of the terminal device is greater than an RSRP value of a link associated with the channel of the terminal device comprises:
sending the notification information to the network device if it is detected that the RSRP value of the reference signal of the terminal device is greater than a sum of the RSRP value of the link associated with the channel of the terminal device and a first offset.

15. The method according to claim 13, wherein the sending the notification information to the network device if it is detected that an SINR value of the reference signal of the terminal device is greater than an SINR value of a link associated with the channel of the terminal device comprises:
sending the notification information to the network device if it is detected that the SINR value of the reference signal of the terminal device is greater than a sum of the SINR value of the link associated with the channel of the terminal device and a first offset.

16. The method according to claim 1, wherein the sending notification information to a network device comprises:
sending the notification information to the network device through a physical uplink control channel PUCCH and/or a physical random access channel PRACH.

17. The method according to claim 16, wherein the sending the notification information to the network device comprises:
sending the notification information to the network device a first time after detecting that the terminal device satisfies the beam management condition.

18. The method according to claim 16, wherein the sending the notification information to the network device through a physical uplink control channel PUCCH and/or a physical random access channel PRACH comprises:
sending the notification information to the network device through the PUCCH or the PRACH according to a type of the beam management condition.

19. The method according to claim 18, wherein the PUCCH or the PRACH is associated with a configuration of a channel state CSI report.

20. The method according to claim 1, wherein the sending notification information to a network device comprises:
sending the notification information to the network device through a media access control control element MAC CE, wherein the MAC CE comprises the beam management condition and/or first reference signal information, and the first reference signal information comprises one or more of a reference signal index of a first reference signal, an RSRP value corresponding to the first reference signal, and an SINR value corresponding to the first reference signal.

21. The method according to claim 20, wherein the sending the notification information to the network device through a media access control control element MAC CE comprises:
including the MAC CE in a physical uplink shared channel PUSCH scheduled by a first piece of downlink control information DCI after the beam management condition is satisfied, and sending the notification information to the network device.

22. The method according to claim 20, wherein the sending the notification information to the network device through a media access control control element MAC CE comprises:
including the MAC CE in a 1^{st} configured grant PUSCH sent a second time after the beam management condition is satisfied, and sending the notification information to the network device.

23. The method according to claim 1, wherein the receiving feedback information sent by the network device regarding the notification information comprises:
receiving, by detecting a PDCCH scheduled in a search space SS or a CORESET, the feedback information sent by the network device regarding the notification information.

24. The method according to claim 21, wherein the receiving feedback information sent by the network device regarding the notification information comprises:
if it is detected that another PUSCH that has a same automatic repeat request mechanism sequence number HARD ID as the PUSCH exists, receiving the feedback information sent by the network device regarding the notification information.

25. The method according to claim 19, wherein the receiving feedback information sent by the network device regarding the notification information comprises:
if receiving a trigger command, receiving the feedback information sent by the network device regarding the notification information, wherein the trigger command is used for triggering a CSI report corresponding to the configuration of the channel state CSI report.

26. The method according to claim 1, further comprising:
re-sending the notification information to the network device if the feedback information regarding the notification information is not received a third time after the notification information is sent to the network device.

27. A communication method, applied to a network device, the method comprising:
receiving notification information sent by a terminal device, wherein the notification information is received when the terminal device detects that a beam management condition is satisfied, and the beam management condition is related to link quality of a reference signal of the terminal device and/or link quality associated with a channel of the terminal device; and
sending feedback information regarding the notification information to the terminal device.

28. The method according to claim 27, wherein the beam management condition comprises at least one of the following:
a link quality value of the reference signal of the terminal device is greater than or equal to a first threshold, a link quality value associated with the channel of the terminal device is less than a second threshold, the link quality value of the reference signal of the terminal device is greater than or equal to the first threshold and the link quality value associated with the channel of the terminal device is less than the second threshold, the link quality value of the reference signal of the terminal device is better than the link quality value associated with the channel of the terminal device, and a quality change value that is of the link quality value associated with the channel of the terminal device and that is within a first duration is greater than a change threshold.

29. The method according to claim 27, wherein the receiving notification information sent by a terminal device comprises:
receiving, through a PUCCH and/or a PRACH, the notification information sent by the terminal device.

30. The method according to claim 29, wherein the receiving the notification information sent by the terminal device comprises:
receiving, at a fourth time, the notification information sent by the terminal device, wherein the fourth time is a first time after the terminal device detects that the beam management condition is satisfied.

31. The method according to claim 29, wherein the receiving, through a PUCCH and/or a PRACH, the notification information sent by the terminal device comprises:
receiving, through the PUCCH and/or the PRACH according to a type of the beam management condition, the notification information sent by the terminal device.

32. The method according to claim 31, wherein the PUCCH or the PRACH is associated with a configuration of a channel state CSI report.

33. The method according to claim 27, wherein the receiving notification information sent by a terminal device comprises:
receiving, through a media access control control element MAC CE, the notification information sent by the terminal device, wherein the MAC CR comprises the beam management condition and/or first reference signal information, and the first reference signal information comprises one or more of a reference signal index of a first reference signal, an RSRP value corresponding to the first reference signal, and an SINR value corresponding to the first reference signal.

34. The method according to claim 27, wherein the sending feedback information regarding the notification information to the terminal device comprises:
sending the feedback information regarding the notification information to the terminal device by detecting a PDCCH scheduled in a search space SS or a CORESET.

35. A terminal device, comprising:
a storage, configured to store a computer program or computer instructions; and
a processor, configured to execute the computer program or computer instructions stored in the storage, to cause the terminal device to perform the method according to any one of claims 1 to 26.

36. A network device, comprising:
a storage, configured to store a computer program or computer instructions; and
a processor, configured to execute the computer program or computer instructions stored in the storage, to cause the network device to perform the method according to any one of claims 27 to 34.

37. A communication system, comprising a terminal device and a network device, wherein the terminal device is configured to perform the method according to any one of claims 1 to 26, and the network device is configured to perform the method according to any one of claims 27 to 34.

38. A computer storage medium, configured to store a computer program, wherein the computer program, when executed, is used for implementing the method according to any one of claims 1 to 34.
